# EUROPEAN PATENT APPLICATION

(11) **EP 1 072 497 A2**
(43) Date of publication of application: **31.01.2001**
(21) Application number: 00202439.6
(22) Date of filing: 10.07.2000
(51) Int. Cl.: B62D 1/189

(54) **Steering column mounting system and bracket**

(30) Priority: 30.07.1999 GB 9917887
(71) Applicant: Delphi Technologies, Inc., Troy, MI 48007 (US)
(72) Inventor: Cataldi, Christophe J., 77340 ontault Combault (FR); Cuiller, Dominique N.M., 93600 Aulnay-sous-Bois (FR); Pugliese, Olivier, 93190 Livry Gargan (FR)
(74) Representative: Denton, Michael John

(57) **Abstract**

A mounting bracket (20) for a mounting system (10) for a steering column of a motor vehicle, the mounting bracket comprising a first arm (36); a second arm (38) extending in a plane substantially perpendicular to the plane of the first arm and connected to the first arm along an edge (40); one or more indents (42) formed in the edge to substantially prevent pivoting of the first arm relative to the second arm about the edge; the first arm having first, second and third portions (48, 50, 52), the first and second portions being spaced apart, extending away from the third portion in the same direction, being connected to the third portion along a common axis (B), and being connected to the second arm at the edge; and at least one slot (56) formed in the first arm at the common axis at the connection between the first and third portion, and between the second and third portion. Moves the pivot axis away from the edge between the first and second arms for improved strength and easy relocation when required.

## Description

### Technical Field

The present invention relates to a mounting system for a steering column of a motor vehicle, and in particular to a mounting bracket for the mounting system.

### Background of the Invention

It is well known to provide a mounting system for a steering column which allows rake and/or tilting of the column relative to the vehicle body. The mounting systems generally include first and second mounting brackets, with the rake and/or tilting mechanism assembled on the second bracket. The first bracket is generally substantially L-shaped with the join or edge connecting the two arms of the L-shape providing a pivot axis. The problem with such an arrangement is that the pivot axis is substantially fixed and cannot be relocated relative to any alternative locations in the pivot axis for the rake and/or tilt mechanism.

### Summary of the Invention

It is an object of the present invention to overcome the above mentioned problem.

A mounting bracket in accordance with the present invention is characterised by the features specified in Claim 1.

A mounting system is accordance with the present invention is characterised by the features specified in Claim 7.

The present invention provides a mounting bracket which can provide a pivot axis which is spaced from the edge between the first and second arms, and which is easily relocated during the manufacture of the mounting bracket. Additionally, the present invention provides a mounting bracket of increased strength when compared to known designs, and which is less susceptible to degradation during use.

### Brief Description of the Drawings

The present invention will now be described, by way of example, with reference to the accompanying drawings, in which:
Figure 1 is a perspective view of a mounting system, in accordance with the present invention, for a steering column of a motor vehicle; and

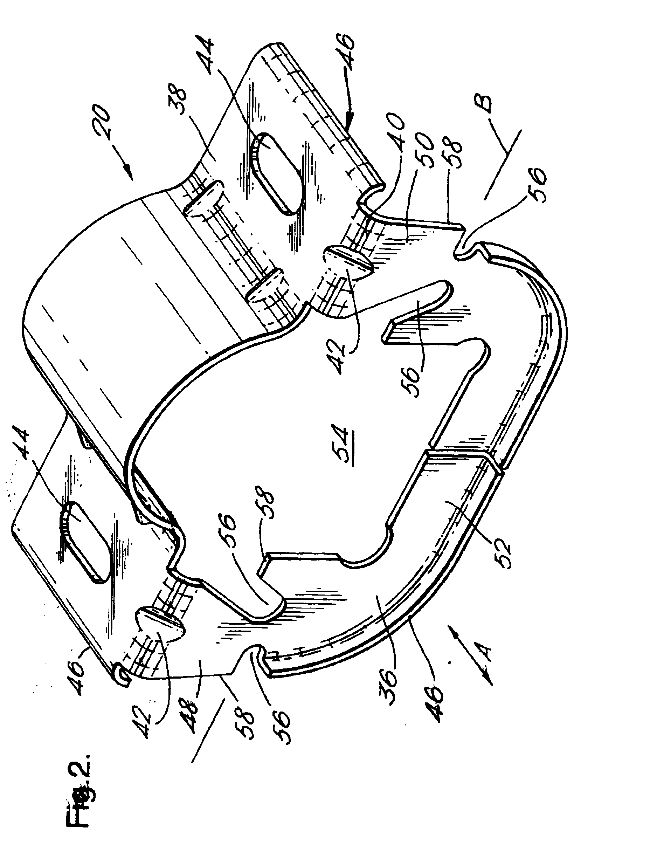

Figure 2 is a perspective view of the first mounting bracket, in accordance with the present invention, of the system of Figure 1.

### Description of the Preferred Embodiment

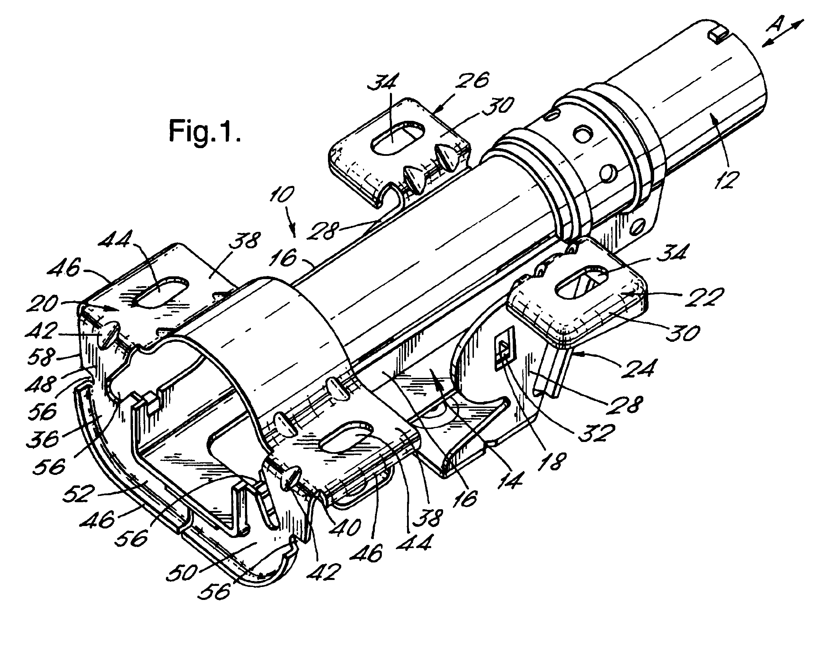

Referring to Figure 1, the mounting system 10 for the steering column (not shown) of a motor vehicle allows limited tilting or raking movement of the steering column relative to the body (not shown) of the vehicle. The mounting system 10 comprises a jacket member 12 which is welded, or otherwise permanently secured, to a channel-shaped member 14. In use, the jacket member 12 and the channel-shaped member 14 extend in an axial direction A and substantially surround a portion of the steering column, and are secured to the steering column. The channel-shaped member 14 is preferably substantially U-shaped and has side walls 16 which extend in the axial direction A. An elongate aperture 18, which extends in the axial direction A, is formed in each wall 16, with the apertures being aligned.

The mounting system 10 also includes a first mounting bracket 20, in accordance with the present invention, and a second mounting bracket 22. The second mounting bracket 22 has a first L-shaped portion 24 and a second L-shaped portion 26. Each L-shaped portion 24, 26 has a first arm 28 and a second arm 30. Each first arm 28 is positioned adjacent one of the side walls 16 of the channel-shaped member 14, and each first arm has an elongate aperture 32 formed therein which extends at an angle (preferably perpendicularly) to the axial direction A. The aperture 32 in each first arm 28 is positioned adjacent the aperture 18 in the corresponding side wall 16 so that the apertures can receive a suitable clamping (rake and/or tilt) mechanism (not shown) for releasably clamping the second bracket 22 to the channel-shaped member 14. Each second arm 30 extends away from the jacket member 12 and channel-shaped member 14 and includes an aperture 34 for securing the second mounting bracket 22 to the body of the vehicle.

The first mounting bracket 20 comprises a first arm 36 and a second arm 38 which extend in planes substantially perpendicular to one another. The plane of the first arm 36 is substantially perpendicular to the axial direction A. The first mounting bracket 20 is stamped from sheet metal with the first and second arms 36, 38 integrally joined along an edge 40. The edge 40 includes indents 42 formed therein to substantially prevent pivoting of the first arm 36 relative to the second arm 38 about the edge 40. The second arm 38 includes a pair of apertures 44 for securing the first mounting bracket 20 to the body of the vehicle. Both the first arm 36 and the second arm 38 preferably include an upturned lip 46 along portions of their free outer edges to provide resilience to the first and second arms.

The first arm 36 includes first, second and third portions 48, 50, 52 which are joined to define an opening 54 which corresponds in shape and size to the cross-sectional shape and size of the channel-shaped member 14. The channel-shaped member 14 is positioned in the opening 54 and is welded, or otherwise secured, to the third portion 52 of the first arm 36 of the first mounting bracket 20. The first and second portions 48, 50 are joined to, and extend away from, the edge 40 on opposed sides of the opening 54. The third portion 52 connects the first and second portions 48, 50. The first and second portions 48, 50 are therefore spaced apart, extend away from the third portion 52 in the same direction, and are connected to the third portion along a common axis B. Slots 56 are cut in the edges 58 of the first arm 36 where the first portion 48 connects with the third portion 52, and where the second portion 50 connects with the third portion. The slots 56 are substantially aligned along the common axis B, which is substantially parallel to, and spaced from, the edge 40.

In use, when the combination of channel-shaped member 14 and jacket 12 member is moved in a raking or tilting movement relative to the second mounting bracket 22, the first mounting bracket 20 resiliently bends along the axis B between the third portion 52 of the first arm 36 and the first and second portions 48, 50. That is, the third portion 52 of the first arm 36 resiliently pivots about the axis B relative to the first and second portions 48, 50, with substantially no movement of the first and second portions relative to the second arm 38 about the edge 40.

Such an arrangement has the advantages of ensuring no stress concentration at the edge 40, thereby providing a stronger bracket with reduced risk of degradation in use. Also, the position of the common or pivot axis B can be selected (and relocated, if required, during manufacture of the first mounting bracket 20) to be compatible with the pivot axis of the rake and/or tilt mechanism between the second mounting bracket 22 and the channel-shaped member 14.

## Claims

1. A mounting bracket (20) for a mounting system (10) for a steering column of a motor vehicle, the mounting bracket comprising a first arm (36); a second arm (38) extending in a plane substantially perpendicular to the plane of the first arm and connected to the first arm along an edge (40); one or more indents (42) formed in the edge to substantially prevent pivoting of the first arm relative to the second arm about the edge; the first arm having first, second and third portions (48, 50, 52), the first and second portions being spaced apart, extending away from the third portion in the same direction, being connected to the third portion along a common axis (B), and being connected to the second arm at the edge; and at least one slot (56) formed in the first arm at the common axis at the connection between the first and third portion, and between the second and third portion.

2. A mounting bracket as claimed in Claim 1, wherein the slots are formed in the edge (58) of the first arm (36).

3. A mounting bracket as claimed in Claim 1 or Claim 2, wherein the common axis (B) is substantially parallel to the edge (40) between the first and second arms (36, 38).

4. A mounting bracket as claimed in any one of Claims 1 to 3, wherein the first, second and third portions (48, 50, 52) of the first arm (36) define an opening (54) of predetermined shape and size.

5. A mounting bracket as claimed in any one of Claims 1 to 4, wherein the first and second arms (36, 38) have an upturned lip (46) along at least a portion of their outer free edges.

6. A mounting bracket as claimed in any one of Claims 1 to 5, wherein the mounting bracket is stamped from sheet metal in one-piece.

7. A mounting system (10) for a steering column of a motor vehicle comprising mounting means (12, 14) extending in an axial direction (A) and securable with the steering column; a first mounting bracket (20) as claimed in any one of claims 1 to 6, the third portion (52) of the first arm (36) being secured to the mounting means; a second mounting bracket (22) spaced from the first mounting bracket in the axial direction; and a rake and/or tilt mechanism connecting the second mounting bracket with the mounting means.

8. A mounting system as claimed in Claim 7, wherein the first mounting bracket (20) has an opening (54) as claimed in Claim 4; wherein the mounting means(12, 14) has a portion (14) with a cross-sectional shape and size which corresponds to the shape and size of the opening; and wherein the portion of the mounting means is positioned in the opening and secured to the third portion (52) of the first arm (36).

9. A mounting system as claimed in Claim 8, wherein the portion of the mounting means (12, 14) is a channel-shaped member (14).
